# EUROPEAN PATENT SPECIFICATION

(11) **EP 3 968 686 B1**
(45) Date of publication and mention of the grant of the patent: **06.05.2026**
(21) Application number: 20196157.0
(22) Date of filing: 15.09.2020
(51) Int. Cl.: H04W 24/06, H04L 1/24, H04W 56/00

(54) **METHOD OF REAL-WORLD TESTING OF A DEVICE UNDER TEST**
VERFAHREN ZUR PRÜFUNG EINER ZU PRÜFENDEN VORRICHTUNG UNTER REALEN BEDINGUNGEN
PROCÉDÉ DE TEST DANS LE MONDE RÉEL D'UN DISPOSITIF SOUS TEST

(43) Date of publication of application: 16.03.2022
(73) Proprietor: Rohde & Schwarz GmbH & Co. KG, 81671 München (DE)
(72) Inventor: Rosier, Holger, 81671 München (DE); Naehring, Alexander, 81671 München (DE); Gabel, Hubert, 81671 München (DE); Ion, Daniel, 81671 München (DE)
(74) Representative: Novagraaf Group

(56) References cited:
- EP-A1- 3 121 729
- EP-A1- 3 531 739
- EP-B1- 3 121 729
- US-A1- 2012 051 224
- US-A1- 2019 107 632
- US-A1- 2020 053 683
- HASAN KHONDOKAR FIDA: "GNSS time synchronisation in co-operative vehicular networks", 1 January 2018 (2018-01-01), XP055781510, Retrieved from the Internet <URL:https://eprints.qut.edu.au/120849/1/Khondokar%20Fida_Hasan_Thesis.pdf> [retrieved on 20210303]

## Description

The invention relates to a method of real-world testing of a device under test with laboratory equipment.

Nowadays, modern vehicles have a high connectivity that is used for different applications. For instance, the vehicles communicate with each other, which is also called Vehicle-to-Vehicle (V2V) communication, in order to provide each other with information, such as safety warnings and traffic information.

Further, modern vehicles are also enabled to communicate with pedestrians, which is called Vehicle-to-Pedestrian (V2P) communication, with infrastructure, which is called Vehicle-to-Infrastructure (V2I) communication, and with networks, which is called Vehicle-to-network (V2N) communication. These different as well as further applications are summarized in the so-called Vehicle-to-Everything (V2X) communication. The respective V2X communication corresponds to a Cellular-V2X communication that may use Long Term Evolution (LTE) or rather 5G telecommunication standards, particularly 5G-NR.

In general, the V2X communication using modern telecommunication standards offers low-latency such that V2X communication can be used for topics like autonomous driving, road safety and efficient traffic management. The V2X communication may be based on Global Navigation Satellite System (GNSS) signals providing timing information, which is used for synchronizing the devices participating in the V2X communication such that they are enabled to communicate with each other accurately.

However, the different devices participating in the V2X communication are tested before they are used under real conditions. Therefore, V2X connectivity tests are performed, wherein reliability, accuracy as well as interoperability may be tested appropriately.

Typically, the respective tests are done in laboratories under laboratory conditions by means of laboratory test equipment. This ensures that a respective device under test can be controlled completely by means of the laboratory test equipment. In fact, the test equipment provides control signals as well as input signals for the device under test, for instance GNSS signals for synchronization, thereby ensuring reproducible tests of the device under test. Usually, test scenarios are defined that simulate real-world tests.

Nevertheless, the respective devices used for V2X communication shall also be tested in the field, namely under real-world conditions. However, the test equipment used in the laboratories cannot handle signals of external sources that are typically available when testing in the field such that reproducible tests of the device under test cannot be ensured. Accordingly, the laboratory test equipment cannot be used in the field without modifying the laboratory test equipment, namely by providing an additional interface, for instance a GNSS interface that enables the laboratory test equipment to receive and process a GNSS signal received from an external source. The additional interface implemented results in higher costs and more efforts required for testing the device under test under real-world conditions. Moreover, this concept does not ensure reliable or rather reproducible tests of the device under test. In other words, simply replacing a simulated GNSS signal with a real GNSS signal is not applicable.

A method for testing wireless devices using predefined test segments initiated by over-the-air signal characterization is described in US 2012 / 0051224 A1.

"GNSS time synchronisation in co-operative vehicular networks" is described in a publication by Hasan Khondokar Fida under the respective title referenced under XP055781510, March 2018.

EP 3 531 739 A1 describes "testing the resource reservation behavior of at least a first device under test in an emulated device-to-device network environment".

Accordingly, there is a need for a cost-efficient method of real-world testing of a device under test with reduced efforts.

The invention provides a method of real-world testing of a device under test with a laboratory test equipment configured for testing the device under test under laboratory conditions and real-world testing. The device under test is configured to participate in V2X communication. The method comprises the steps of:
- Transmitting at least one data packet via a radio frequency signal, RF signal, by means of a device under test at a certain reference time, wherein the reference time is derived from a global navigation satellite system (GNSS) signal,
- Receiving the data packet by means of a test equipment, wherein the data packet received has been transmitted by the device under test at the reference time,
- Processing the data packet received by means of the test equipment such that the test equipment synchronizes itself with the reference time, wherein the test equipment adapts its internal time until decoding the data packet received from the device under test is successful, and
- Transmitting at least one test data packet by means of the test equipment, wherein the test data packet is synchronized with the reference time.

The invention is based on the finding that a real global navigation satellite system (GNSS) signal can be used for adapting the test equipment appropriately, as the device under test transmitting the data packet is able to process a (GNSS) signal received. Hence, the at least one data packet transmitted by the device under test is synchronized with the GNSS signal due to transmitting the at least one data packet at the certain reference time that is derived from the GNSS signal. This ensures that several participants are enabled to synchronously transmit data packets, as they are enabled to receive the (same) GNSS signal. The GNSS signal may be provided by an (external) GNSS source, for instance a satellite.

The data packet may be transmitted via a radio frequency signal (RF signal), which is received by the test equipment. The respective test equipment that receives the data packet may be established as a laboratory test equipment, which means that the same test equipment can be used for real-world testing as well as testing under laboratory conditions. In fact, it is not necessary that different test equipment is used for testing the respective device under test under different conditions, namely under laboratory conditions as well as under real-world conditions.

Further, it is not necessary that additional interfaces have to be implemented into the test equipment that are only used for real-world testing in order to enable the test equipment to handle signals received from external sources. Accordingly, the test equipment uses the communication interface provided for radio frequency transmission/reception, which is implemented anyway.

Generally, the test equipment is synchronized with the (external) GNSS signal source even though the test equipment does not directly receive the GNSS signal, but it is synchronized with information derived from the GNSS signal, particularly the reference time associated with the GNSS signal, due the radio frequency signal transmitted by the device under test, namely the at least one data packet transmitted by the device under test. The device under test itself is enabled to handle and process GNSS signals received from external sources. Accordingly, a sufficient synchronization of the test equipment with the GNSS signal, particularly the (external) GNSS signal source, is provided that ensures testing of a device under test in the field, namely under real-world conditions, wherein reproducible tests are ensured.

Therefore, reproducible tests can be performed by means of the test equipment, as the test equipment is synchronized accordingly.

The device under test may be part of the test equipment, namely integrated within the test equipment.

Alternatively, the device under test is formed separately with respect to the test equipment.

The global navigation satellite system (GNSS) signal may relate to a global positioning system (GPS) signal, a Galileo signal, a GLObal NAvigation Satellite System (GLONASS) signal, a Beidou signal, a NAVSTAR signal, a Compass signal or a SBAS signal. In any case, the GNSS signal may relate to a real signal of a base station.

When the test equipment is enabled to successfully decode the data packet received, it is ensured that the test equipment has been synchronized with the GNSS signal (source) or rather the reference time derived from the GNSS signal. Therefore, the internal time of the test equipment is adapted or rather moved until the test equipment is able to decode the data packet received.

An aspect provides that the test equipment is synchronized by using the global navigation satellite system signal that is received and processed by the device under test. The test equipment does not directly receive the GNSS signal, but the test equipment receives the data packet transmitted at the certain reference time, which is derived from the GNSS signal such that the test equipment can be (indirectly) synchronized with the GNSS signal (source), namely via the device under test.

Another aspect provides that timing information used for the internal synchronization of the test equipment is obtained from the data packet transmitted by the device under test that has received and processed the global navigation satellite system signal previously. As mentioned above, the device under test is enabled to receive and process the GNSS signal, particularly from an external source, wherein the device under test transmits the at least one data packet at the certain reference time that has been derived from the GNSS signal. The test equipment receives the radio frequency signal or rather the data packet, thereby internally synchronizing itself with the GNSS signal (source) by using respective timing information gathered from the data packet received.

The synchronization includes adapting an internal time of the test equipment, particularly moving the internal time of the test equipment. Thus, the test equipment moves its internal time until the test equipment is enabled to probably receive the at least one data packet transmitted by the device under test. This adaption or rather moving of the internal time is done until the test equipment is synchronized such that the test equipment is enabled to receive the data packet correctly.

Moreover, the processing of the data packet received corresponds to a decoding of the data packet received. Therefore, the test equipment receiving the data packet from the device under test tries to decode the data packet accordingly. In case that the test equipment is not able to decode the data packet received, the test equipment is not probably synchronized with the reference time or rather the GNSS signal (source).

Another aspect provides that a temporal offset is applied internally until the test equipment is synchronized with the reference time. The temporal offset is used to move the internal time of the test equipment accordingly, thereby ensuring that the test equipment is enabled to decode the data packet received. In fact, the test equipment is enabled to decode the data packet once the temporal offset used ensures a temporal matching of the internal time of the test equipment and the reference time derived from the GNSS signal.

According to another aspect, several data packets are received from the device under test, wherein the test equipment synchronizes itself with the reference time in an iterative manner. Particularly, a temporal offset is increased until decoding of the data packets received from the device under test is successful. Therefore, the synchronization of the test equipment is done iteratively until the at least one data packet can be decoded by the test equipment in a successful manner.

Further, the test data packet may be amplified prior to its transmission by means of an amplifier of the test equipment. The amplifier is configured to amplify the test data packet to be transmitted by the test equipment for testing the device under test accordingly. This ensures that several devices under test or rather participants can be tested simultaneously even though their distance to the test equipment may be different.

According to another aspect, the test data packet transmitted by means of the test equipment simulates a plurality of participants, particularly Vehicle-to-Everything (V2X) participants. Therefore, the characteristics and/or behavior of the device under test when communicating with a plurality of communication partners can be tested appropriately by means of the test equipment, namely in the field. The V2X participants may be part of the V2X communication, wherein the V2X participants relate to networks, infrastructure or rather vehicles.

The device under test may be a vehicle having a communication module. Accordingly, the characteristics and/or behavior of the vehicle with the communication module can be tested in the field in an appropriate manner.

Furthermore, the device under test may be an on-board module adapted to use global navigation satellite system signals for participating in Vehicle-to-Everything (V2X) communication. The on-board module may be integrated within a vehicle or rather another participant that communicates with a vehicle. Thus, the on-board module may relate to a certain participant of the Vehicle-to-Everything (V2X) communication.

In addition, at least one real vehicle may receive the test data packet transmitted by the test equipment. The real vehicle may comprise the device under test. Moreover, the vehicle may be another participant of the Vehicle-to-Everything (V2X) communication.

Another aspect provides that a test campaign is started after the test equipment has synchronized itself with the reference time, wherein the test campaign includes the transmission of the test data packet. Accordingly, a blind adaption of the test equipment takes place at the beginning. Afterwards, the test campaign can be started according to which the device under test is tested.

Another aspect provides that data packets are received by the test equipment for a monitoring phase, wherein the test equipment tries to decode the data packets received during the monitoring phase, wherein an adaption phase is provided that follows the monitoring phase, and wherein a time and frequency grid of the test equipment is adapted during the adaption phase. The time and frequency grid of the test equipment is shifted during the adaption phase appropriately, thereby ensuring that the test equipment is synchronized appropriately.

Generally, the time and frequency grid is also called time-frequency radio resources grid.

Further aspects and advantages of the claimed subject matter will become more readily appreciated as the same become better understood by reference to the following detailed description, when taken in conjunction with the accompanying drawings. In the drawings,
- Figure 1 schematically shows an overview of a setup for testing a device under test,
- Figure 2 shows a flow-chart illustrating the method of real-world testing of a device under test according to the invention, and
- Figure 3 shows an overview illustrating the method.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed. For the purposes of the present disclosure, the phrase "at least one of A, B, and C", for example, means (A), (B), (C), (A and B), (A and C), (B and C), or (A, B, and C), including all further possible permutations when greater than three elements are listed. In other words, the term "at least one of A and B" generally means "A and/or B", namely "A" alone, "B" alone or "A and B".

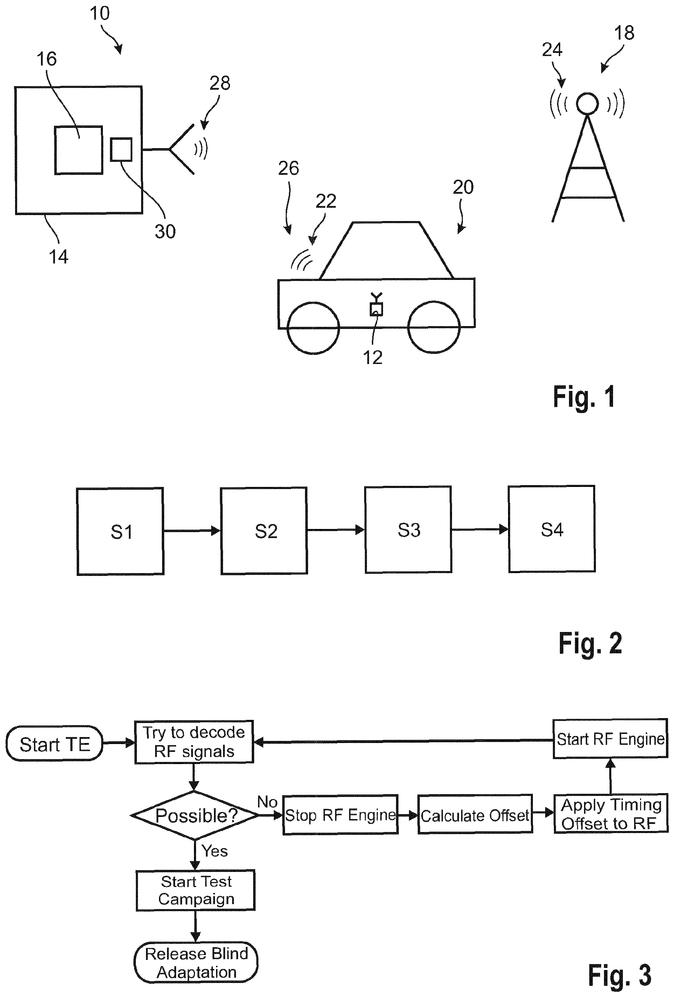

In Figure 1, a setup 10 for testing a device under test 12 under real-world conditions is shown, wherein laboratory equipment is used for testing the device under test 12.

In fact, a test equipment 14 is provided that relates to a laboratory test equipment that is typically used for testing the device under test 12 under laboratory conditions.

The test equipment 14 has an internal processing module 16 that is used to synchronize the equipment 14 in order to ensure that the test equipment 14 can be used for reproducible tests of the device under test 12 under real-world conditions.

In the shown embodiment, the setup 10 also comprises a base station 18 that transmits real-world global navigation satellite system (GNSS) signals that are received and processed by the device under test 12.

The device under test 12 is provided by an on-board module that is integrated within a vehicle 20. The on-board module may be established by a communication module. Furthermore, the entire vehicle 20 may correspond to the device under test 12.

Alternatively, the device under test 12 may relate to an on-board module that is integrated in a communication partner of a vehicle, for instance an infrastructure and/or network component.

The setup 10 shown in Figure 1 is generally enabled to perform a method of real-world testing of the device under test 12 with laboratory equipment, wherein the method is illustrated in the flow-chart of Figure 2.

In a first step S1, at least one data packet 22 is transmitted by means of the device under test 12 at a certain reference time. The reference time is derived from a global navigation satellite system (GNSS) signal 24. The data packet 22 may be transmitted by means of a radio frequency (RF) signal 26.

In the shown embodiment, the GNSS signal 24 is transmitted by the base station 18. However, the GNSS signal 24 may also be transmitted by a satellite.

In a second step S2, the data packet 22 is received by means of the test equipment 14, wherein the received data packet 22 has been transmitted by the device under test 12 at the reference time.

In a third step S3, the received data packet 22 is processed by means of the test equipment 14 such that the test equipment 14 synchronizes itself with the reference time.

The synchronization of the test equipment 14 includes adapting an internal time of the test equipment 14, particularly by moving an internal time of the test equipment 14. In fact, a temporal offset is adapted until the test equipment 14 is synchronized appropriately. This is done by means of the processing module 16.

During the processing of the received data packet 22, the test equipment 14 tries to decode the received data packet 22, which is only successful once the test equipment 14 has been synchronized with the reference time correctly. Therefore, the test equipment 14 adapts its internal time until decoding of the received data packet 22 from the device under test 12 is successful. This may be done iteratively such that the temporal offset is increased in a step-wise manner until the received data packet 22 from the device under test 12 is decoded successfully. Accordingly, the temporal offset is increased until decoding of the received data packets 22 is successful.

In general, the test equipment 14 receives several data packets 22 in a monitoring phase, in which the test equipment 14 tries to decode the received data packets 22.

Afterwards, an adaption phase takes place that follows the monitoring phase, wherein a time and frequency grid of the test equipment 14 is adapted, thereby synchronizing the test equipment 14 with the reference time appropriately.

Generally, the test equipment 14 receiving the data packet 22 from the device under test 12 observes the device under test 12 and attempts to decode the data packet 22 received from the device under test 12, namely during the monitoring phase and the subsequent adaption phase.

If decoding of the data packets 22 is not successful, an internal time offset is introduced and increased continuously, particularly in a step-wise manner, until the radio frequency signal 26, namely the data packets 22, transmitted by the device under test 12 can be decoded successfully. Then, it is assumed that a sufficiently accurate synchronization is provided even though the test equipment 14 does not receive the real GNSS signal 24 directly. However, it is assumed that the sufficiently accurate synchronization can be derived from the radio frequency signal 26 received from the device under test 12, thereby ensuring to perform the respective tests of the device under test 12 in the field, namely under real-world conditions.

Hence, a test campaign can be started after the test equipment 14 has been synchronized itself with the reference time, which is done in a fourth step S4.

In fact, at least one test data packet 28 is transmitted by means of the test equipment 14, wherein the test data packet 28 is synchronized with the reference time. Accordingly, the test equipment 14 is synchronized with the GNSS signal 24 even though the test equipment 14 does not directly receive the GNSS signal 24, but the radio frequency signal 26 encompassing the at least one data packet 22.

Therefore, the device under test 12 and the test equipment 14 are synchronized with each other in a reproducible manner, as both components of the setup 10 are synchronized with the external GNSS signal source, for instance the base station 18.

Accordingly, the same test equipment 14 that is used under laboratory conditions or rather in the laboratory can also be used for tests under real-world conditions, namely in the field.

The test equipment 14 is adapted by observing the radio frequency signal 26 transmitted by the device under test 12 while dynamically adapting the test equipment 14.

This is done by shifting the time and frequency grid of the test equipment 14 until the radio frequency signals 26 received from the device under test 12 can be decoded successfully. Once the radio frequency signals 26 from the device under test 12 can be decoded successfully, it is assumed that the test equipment 14 has been adapted to the device under test 12 with sufficient accuracy so that the intended test campaign can begin.

By using the GNSS signal 24 for providing the certain reference time, it is also ensured that several participants of the V2X communication can be synchronized appropriately, thereby ensuring a test campaign for several participants of a Vehicle-to-Everything (V2X) communication.

Moreover, the test data packet 28 transmitted by the test equipment 14 may simulate a plurality of participants, particularly Vehicle-to-Everything (V2X) participants. Accordingly, the characteristics of the device under test 12 can be tested when communicating with several participants.

The test data packet 28 transmitted by the test equipment 14 may have been amplified previously by means of an internal amplifier 30 of the test equipment 14.

In general, the test equipment 14 is blind for the external source/information used for synchronization, namely the GNSS signal source.

However, the test equipment 14 observes the device under test 12, which is not blind for the respective external source/information. Accordingly, the test equipment 14 is enabled to derive timing information from the radio frequency signals 26 received from the device under test 12, which is derived from the external source/information. Furthermore, the test equipment 14 is enabled to adapt its internal parameters accordingly in order to synchronize itself with the external source/information.

Therefore, laboratory test equipment that typically only receives simulated GNSS signals is also enabled to deal with real-world information derived from real-world GNSS signals 24 due to the fact that the test equipment 14, namely the laboratory test equipment, derives the respective timing information from the radio frequency signal 26 received from the device under test 12, which has derived its respective information from the real-world GNSS signal 24.

As mentioned above, the test equipment 14 adapts its internal time offset recurrently until the radio frequency signal 26 transmitted by the device under test 12 can be successfully decoded within the test equipment 14, which ensures that the test equipment 14 has been synchronized appropriately.

This is also shown in Figure 3, in which an overview of the method is illustrated.

The test equipment 14 abbreviated by "TE" is started, wherein it tries to decode radio frequency signals 26 (RF signals) received from the device under test 12.

If the test equipment 14 is enabled to decode the radio frequency signals 26, the intended test campaign can be started.

Otherwise, a radio frequency engine of the test equipment 14 is stopped, wherein an internal time offset is calculated by means of the processing module 16.

The internal time offset calculated is applied to the test equipment 14 in order to move or rather shift the internal time of the test equipment 14 appropriately. Then, the radio frequency engine of the test equipment 14 is started again, wherein the test equipment 14 tries to decode the radio frequency signals 26 received from the device under test 12.

If the test equipment 14 is still not able to decode the radio frequency signals 26 received from the device under test 12, the above-mentioned steps concerning the internal time offset calculation and application are repeated at least once, particularly several times, until the test equipment 14 is enabled to decode the radio frequency signals 26. This indicates that the test equipment 14 has been synchronized with the reference time provided by the GNSS signal 24 appropriately.

Afterwards, the test campaign can be started for testing the device under test 12 under real-world conditions while using laboratory equipment, namely the laboratory test equipment.

## Claims

1. A method of real-world testing of a device under test (12) with a laboratory test equipment configured for testing the device under test under laboratory conditions and real-world testing, the device under test being configured to participate in V2X communication, wherein the method comprises the steps of:
- Transmitting at least one data packet (22) via a radio frequency signal, RF signal, by means of a device under test (12) at a certain reference time, wherein the reference time is derived from a global navigation satellite system signal (24),
- Receiving the data packet (22) by means of a test equipment (14), wherein the data packet (22) received has been transmitted by the device under test (12) at the reference time,
- Processing the data packet (22) received by means of the test equipment (14) such that the test equipment (14) synchronizes itself with the reference time, wherein the test equipment (14) adapts its internal time until decoding the data packet (22) received from the device under test (12) is successful, and
- Transmitting at least one test data packet (28) by means of the test equipment (14), wherein the test data packet (28) is synchronized with the reference time.

2. The method according to claim 1, wherein the test equipment (14) is synchronized by using the global navigation satellite system signal (24) that is received and processed by the device under test (12).

3. The method according to claim 1 or 2, wherein timing information used for the internal synchronization of the test equipment (14) is obtained from the data packet (22) transmitted by the device under test (12) that has received and processed the global navigation satellite system signal (24) previously.

4. The method according to any of the preceding claims, wherein a temporal offset is applied internally until the test equipment (14) is synchronized with the reference time.

5. The method according to any of the preceding claims, wherein several data packets (22) are received from the device under test (12), and wherein the test equipment (14) synchronizes itself with the reference time in an iterative manner.

6. The method according to any of the preceding claims, wherein a temporal offset is increased until decoding of the data packets received from the device under test (12) is successful.

7. The method according to any of the preceding claims, wherein the test data packet (28) is amplified prior to its transmission by means of an amplifier (30) of the test equipment (14).

8. The method according to any of the preceding claims, wherein the test data packet (28) transmitted by means of the test equipment (14) simulates a plurality of participants.

9. The method according to claim 8, wherein the test data packet (28) transmitted by means of the test equipment (14) simulates Vehicle-to-Everything participants.

10. The method according to any of the preceding claims, wherein the device under test (12) is a vehicle (20) having a communication module.

11. The method according to any of the preceding claims, wherein the device under test (12) is an on-board module adapted to use global navigation satellite system signals (24) for participating in Vehicle-to-Everything communication.

12. The method according to any of the preceding claims, wherein at least one real vehicle (20) receives the test data packet (28) transmitted by the test equipment (14).

13. The method according to any of the preceding claims, wherein a test campaign is started after the test equipment (14) has synchronized itself with the reference time, wherein the test campaign includes the transmission of the test data packet (28).

14. The method according to any of the preceding claims, wherein data packets (22) are received by the test equipment (14) for a monitoring phase, wherein the test equipment (14) tries to decode the data packets (22) received during the monitoring phase, wherein an adaption phase is provided that follows the monitoring phase, and wherein a time and frequency grid of the test equipment (14) is adapted during the adaption phase.

## Patentansprüche

1. Verfahren zum Prüfen eines Prüflings (12) unter realen Bedingungen mit einer zum Prüfen des Prüflings unter Laborbedingungen und zum Prüfen unter realen Bedingungen konfigurierten Laborprüfausrüstung, wobei der Prüfling konfiguriert ist, um an V2X-Kommunikation teilzunehmen, wobei das Verfahren die Schritte umfasst:
- Übertragen mindestens eines Datenpakets (22) über ein Hochfrequenzsignal, HF-Signal, mittels eines Prüflings (12) zu einem bestimmten Referenzzeitpunkt, wobei der Referenzzeitpunkt von einem globalen Navigationssatellitensystemsignal (24) abgeleitet wird,
- Empfangen des Datenpakets (22) mittels einer Prüfausrüstung (14), wobei das empfangene Datenpaket (22) durch den Prüfling (12) zu dem Referenzzeitpunkt übertragen worden ist,
- Verarbeiten des mittels der Prüfausrüstung (14) empfangenen Datenpakets (22) derart, dass sich die Prüfausrüstung (14) mit dem Referenzzeitpunkt synchronisiert, wobei die Prüfausrüstung (14) ihre interne Zeit, bis ein Dekodieren des von dem Prüfling (12) empfangenen Datenpakets (22) erfolgreich ist, anpasst, und
- Übertragen mindestens eines Prüfdatenpakets (28) mittels der Prüfausrüstung (14), wobei das Prüfdatenpaket (28) mit dem Referenzzeitpunkt synchronisiert wird.

2. Verfahren nach Anspruch 1, wobei die Prüfausrüstung (14) durch Verwenden des globalen Navigationssatellitensystemsignals (24), das durch den Prüfling (12) empfangen und verarbeitet wird, synchronisiert wird.

3. Verfahren nach Anspruch 1 oder 2, wobei für die interne Synchronisation der Prüfausrüstung (14) verwendete Zeitinformationen dem Datenpaket (22) entnommen werden, das durch den Prüfling (12), der das globale Navigationssatellitensystemsignal (24) zuvor empfangen und verarbeitet hat, übertragen wird.

4. Verfahren nach einem der vorstehenden Ansprüche, wobei eine zeitliche Versetzung, bis die Prüfausrüstung (14) mit dem Referenzzeitpunkt synchronisiert ist, intern angewandt wird.

5. Verfahren nach einem der vorstehenden Ansprüche, wobei mehrere Datenpakete (22) von dem Prüfling (12) empfangen werden, und wobei sich die Prüfausrüstung (14) iterativ mit dem Referenzzeitpunkt synchronisiert.

6. Verfahren nach einem der vorstehenden Ansprüche, wobei eine zeitliche Versetzung, bis ein Dekodieren der von dem Prüfling (12) empfangenen Datenpakete erfolgreich ist, erhöht wird.

7. Verfahren nach einem der vorstehenden Ansprüche, wobei das Prüfdatenpaket (28) vor seiner Übertragung mittels eines Verstärkers (30) der Prüfausrüstung (14) verstärkt wird.

8. Verfahren nach einem der vorstehenden Ansprüche, wobei das mittels der Prüfausrüstung (14) übertragene Prüfdatenpaket (28) eine Vielzahl von Teilnehmern simuliert.

9. Verfahren nach Anspruch 8, wobei das mittels der Prüfausrüstung (14) übertragene Prüfdatenpaket (28) Vehicle-to-Everything-Teilnehmer simuliert.

10. Verfahren nach einem der vorstehenden Ansprüche, wobei der Prüfling (12) ein Fahrzeug (20), das ein Kommunikationsmodul aufweist, ist.

11. Verfahren nach einem der vorstehenden Ansprüche, wobei der Prüfling (12) ein Bordmodul, das angepasst ist, um globale Navigationssatellitensystemsignale (24) zum Teilnehmen an Vehicle-to-Everything-Kommunikation zu verwenden, ist.

12. Verfahren nach einem der vorstehenden Ansprüche, wobei mindestens ein reales Fahrzeug (20) das durch die Prüfausrüstung (14) übertragene Prüfdatenpaket (28) empfängt.

13. Verfahren nach einem der vorstehenden Ansprüche, wobei eine Prüfkampagne gestartet wird, nachdem sich die Prüfausrüstung (14) mit dem Referenzzeitpunkt synchronisiert hat, wobei die Prüfkampagne das Übertragen des Prüfdatenpakets (28) einschließt.

14. Verfahren nach einem der vorstehenden Ansprüche, wobei Datenpakete (22) durch die Prüfausrüstung (14) für eine Überwachungsphase empfangen werden, wobei die Prüfausrüstung (14) die während der Überwachungsphase empfangenen Datenpakete (22) zu dekodieren versucht, wobei eine Anpassungsphase, die der Überwachungsphase folgt, bereitgestellt wird, und wobei ein Zeit- und Frequenzraster der Prüfausrüstung (14) während der Anpassungsphase angepasst wird.

## Revendications

1. Procédé de test en conditions réelles d'un dispositif sous test (12) avec un équipement de test en laboratoire conçu pour tester le dispositif sous test dans des conditions de laboratoire et des tests en conditions réelles, le dispositif sous test étant conçu pour participer à une communication V2X, dans lequel le procédé comprend les étapes consistant à :
- transmettre au moins un paquet de données (22) par l'intermédiaire d'un signal radiofréquence, signal RF, au moyen d'un dispositif sous test (12) à un certain temps de référence, dans lequel le temps de référence est dérivé d'un signal du système mondial de navigation par satellite (24),
- recevoir le paquet de données (22) au moyen d'un équipement de test (14), dans lequel le paquet de données (22) reçu a été transmis par le dispositif sous test (12) au temps de référence,
- traiter le paquet de données (22) reçu au moyen de l'équipement de test (14) de manière que l'équipement de test (14) se synchronise avec le temps de référence, dans lequel l'équipement de test (14) adapte son temps interne jusqu'à ce que le décodage du paquet de données (22) reçu à partir du dispositif sous test (12) réussisse, et
- transmettre au moins un paquet de données de test (28) au moyen de l'équipement de test (14), dans lequel le paquet de données de test (28) est synchronisé avec le temps de référence.

2. Procédé selon la revendication 1, dans lequel l'équipement de test (14) est synchronisé à l'aide du signal du système mondial de navigation par satellite (24) qui est reçu et traité par le dispositif sous test (12).

3. Procédé selon la revendication 1 ou 2, dans lequel des informations de rythme utilisées pour la synchronisation interne de l'équipement de test (14) sont obtenues à partir du paquet de données (22) transmis par le dispositif sous test (12) qui a reçu et traité le signal du système global de navigation par satellite (24) précédemment.

4. Procédé selon l'une quelconque des revendications précédentes, dans lequel un décalage temporel est appliqué en interne jusqu'à ce que l'équipement de test (14) soit synchronisé avec le temps de référence.

5. Procédé selon l'une quelconque des revendications précédentes, dans lequel plusieurs paquets de données (22) sont reçus à partir du dispositif sous test (12), et dans lequel l'équipement de test (14) se synchronise avec le temps de référence de manière itérative.

6. Procédé selon l'une quelconque des revendications précédentes, dans lequel un décalage temporel est augmenté jusqu'à ce que le décodage des paquets de données reçus à partir du dispositif sous test (12) soit réussi.

7. Procédé selon l'une quelconque des revendications précédentes, dans lequel le paquet de données de test (28) est amplifié avant d'être transmis au moyen d'un amplificateur (30) de l'équipement de test (14).

8. Procédé selon l'une quelconque des revendications précédentes, dans lequel le paquet de données de test (28) transmis au moyen de l'équipement de test (14) simule une pluralité de participants.

9. Procédé selon la revendication 8, dans lequel le paquet de données de test (28) transmis au moyen de l'équipement de test (14) simule des participants « de véhicule à tout autre élément ».

10. Procédé selon l'une quelconque des revendications précédentes, dans lequel le dispositif sous test (12) est un véhicule (20) doté d'un module de communication.

11. Procédé selon l'une quelconque des revendications précédentes, dans lequel le dispositif sous test (12) est un module embarqué conçu pour utiliser des signaux du système mondial de navigation par satellite (24) pour participer à la communication « de véhicule à tout autre élément ».

12. Procédé selon l'une quelconque des revendications précédentes, dans lequel au moins un véhicule réel (20) reçoit le paquet de données de test (28) transmis par l'équipement de test (14).

13. Procédé selon l'une quelconque des revendications précédentes, dans lequel une campagne de test est démarrée après que l'équipement de test (14) s'est synchronisé avec le temps de référence, dans lequel la campagne de test comporte la transmission du paquet de données de test (28).

14. Procédé selon l'une quelconque des revendications précédentes, dans lequel des paquets de données (22) sont reçus par l'équipement de test (14) pendant une phase de surveillance, dans lequel l'équipement de test (14) essaie de décoder les paquets de données (22) reçus pendant la phase de surveillance, dans lequel une phase d'adaptation est prévue qui suit la phase de surveillance, et dans lequel une grille de temps et de fréquence de l'équipement de test (14) est adaptée pendant la phase d'adaptation.
